# FASCICULE DE BREVET EUROPEEN

(11) **EP 1 773 609 B1**
(45) Date de publication et mention de la délivrance du brevet: **03.12.2008**
(21) Numéro de dépôt: 05780116.9
(22) Date de dépôt: 07.07.2005
(51) Int. Cl.: B60G 21/00, B60N 2/01, B60N 2/30, B62D 31/00

(54) **VEHICULE MOTORISE A INCLINAISON LIMITEE**
KRAFTFAHRZEUG MIT BEGRENZTEM NEIGEWINKEL
MOTOR VEHICLE WITH LIMITED ANGLE OF INCLINATION

(30) Priorité: 07.07.2004 FR 0407588; 09.12.2004 FR 0413131
(43) Date de publication de la demande: 18.04.2007
(73) Titulaire: Moulene, 78670 Villennes-sur-Seine (FR)
(72) Inventeur: MOULENE, Daniel, F-78670 Villennes-sur-Seine (FR); MOULENE, Thierry, F-78670 Villennes-sur-Seine (FR)
(74) Mandataire: Thibon-Littaye, Annick
(86) Numéro de dépôt international: PCT/IB2005/001929
(87) Numéro de publication internationale: WO 2006/003489

(56) Documents cités:
- WO-A-97/09223
- FR-A- 2 836 447
- GB-A- 2 279 047

## Description

La présente invention concerne la conception et la réalisation d'un véhicule motorisé à quatre roues.

Un véhicule selon le préambule de la revendication 1 est connu du document WO 97/09223.

Le véhicule selon l'invention est particulièrement conçu et adapté pour les trajets en zone urbaine. Il devra toutefois être entendu que le véhicule selon l'invention ne se limitera pas à être utilisé en ville. Il pourra également être utilisé en zone rurale et pour faire de longues distances.

Le nombre de véhicules motorisés à quatre roues, en particulier les automobiles, en circulation en ville ne cesse de grandir, et ceci s'explique notamment par le fait que chaque foyer voit son pouvoir d'achat augmenter. Ce phénomène est à l'origine de nombreux embouteillages en ville et aux abords des villes. Le nombre croissant d'automobiles en circulation est également à l'origine d'un manque de places de stationnement en ville.

C'est à cause de ces inconvénients que certains conducteurs préfèrent aux automobiles les véhicules motorisés à deux roues, tels que les motos. Ces derniers véhicules présentent en effet l'avantage de se garer facilement en ville du fait de leurs dimensions réduites par rapport à celles des automobiles, et ces véhicules permettent de se faufiler facilement dans le trafic urbain. De tels véhicules présentent toutefois certains inconvénients. Ils ne comportent aucun moyen notable de protection du conducteur par rapport aux automobiles, ce qui est à l'origine de la gravité des accidents impliquant un motard quand ils surviennent. Par ailleurs, la conduite de tels engins par mauvais temps peut très vite devenir contraignante, notamment en cas de vent pouvant déséquilibrer les deux roues, ou en cas de pluie rendant la chaussée glissante. Enfin, la conduite de tels engins est beaucoup plus dangereuse que celles de véhicules du type automobile, en particulier sur chaussée glissante, d'autant plus que le motard risque en cas de dérapage, de coucher le véhicule au sol et de subir de ce fait des blessures très graves.

Par rapport à l'art antérieur, tel qu'il est décrit en particulier dans le brevet américain US 6 149 226 ou dans la demande de brevet français publiée sous le numéro 2 831 866, la présente invention a notamment pour objectif de pallier les problèmes de stationnement en ville, ainsi que les problèmes d'embouteillage. L'invention a également pour objectif de pallier les inconvénients des véhicules motorisés à deux roues.

L'invention concerne un véhicule motorisé à quatre roues, qui est conçu pour pendre une moindre place lorsqu'il est garé et pour pouvoir circuler entre deux automobiles de taille moyenne dans un embouteillage. Suivant l'invention, il présente une ou plusieurs des particularités définies et décrites ci-après, dans leurs diverses combinaisons techniquement opérantes.

Le véhicule selon l'invention comporte un siège conducteur compris dans un poste de conduite de dimensions telles qu'il ne peut accueillir en largeur qu'une seule personne. Ainsi, le véhicule présente une largeur plus petite que les automobiles classiques, dont les postes de conduite sont conçus pour accueillir le plus souvent au moins deux personnes en largeur.

Selon l'invention, dans ses modes de réalisation préférés, le poste de conduite est réalisé solidaire d'un châssis intégré à une structure de protection du conducteur, et cette structure présente, sur les côtés du véhicule, une hauteur telle qu'elle protège au moins les jambes du conducteur en cas de basculement latéral du véhicule ou en cas de choc. De plus, cette structure peut être équipée d'un pare-brise à l'avant du véhicule.

La structure de protection peut être constituée par une carrosserie munie de renforts latéraux pouvant protéger au moins les jambes du conducteur. Elle peut aussi être réalisée sous la forme d'une carrosserie fermée complète, comprenant un toit, un pare-brise, au moins une porte.

Selon l'invention, le véhicule comporte des moyens d'équilibrage dans les virages, ou sur sol incliné par rapport à l'horizontale, par inclinaison simultanée du châssis solidaire du poste de conduite du véhicule et des deux roues avant du véhicule par rapport au sol. Lesdits moyens d'équilibrage sont associés au châssis du véhicule et peuvent être commandés par le conducteur lui-même, sans assistance ou avec assistance, ou même commandés par des moyens automatiques suivant les cas.

Quand, suivant l'invention, l'inclinaison des deux roues avant se fait en même temps que l'inclinaison du poste de conduite, la conduite du véhicule par le conducteur se fait de manière naturelle dans les virages.

Suivant une autre caractéristique propre à l'invention, le véhicule est équipé de moyens de blocage assurant automatiquement le blocage de l'inclinaison lorsque le véhicule s'arrête ou roule à vitesse réduite Ainsi, le conducteur n'a pas à stabiliser le véhicule à l'arrêt avec ses pieds, comme il le ferait par exemple sur un véhicule à deux roues.

Avantageusement, les moyens de blocage sont commandés pour intervenir automatiquement quand le véhicule approche de l'arrêt, ou plus précisément quand sa vitesse s'abaisse jusqu'à une vitesse seuil prédéterminée. Du fait du blocage, le véhicule est ensuite maintenu dans une inclinaison à la valeur en cours au moment du blocage.

Suivant encore une autre caractéristique de l'invention, on prévoit d'équiper le véhicule de moyens supplémentaires qui limitent l'angle d'inclinaison du véhicule, à une valeur d'inclinaison maximale qui est choisie telle que le véhicule ne bascule pas quand il est à l'arrêt, sur sol horizontal, voire même sur sol penché ( correspondant à une roue sur un trottoir par exemple) Ainsi, si lesdits moyens de blocage de l'inclinaison du véhicule sont défaillants, ou s'ils ne peuvent être mis en oeuvre pour diverses raisons, par exemple suite à un accrochage du véhicule avec un autre véhicule, les moyens qui limitent l'inclinaison du véhicule à l'arrêt pallient cette défaillance des moyens de blocage.

De plus, grâce à la présence de quatre roues, délimitant un quadrilatère de sustentation le véhicule suivant l'invention pourra supporter, tout en restant stable, une force centrifuge beaucoup plus importante qu'un véhicule à trois roues, de même voie, dont le polygone de sustentation est triangulaire. On pourra ainsi se contenter d'une inclinaison relativement faible du véhicule pour compenser la force centrifuge, ce qui est un énorme avantage pour beaucoup d'utilisateurs non motocyclistes, car le conducteur n'a pas besoin d'un apprentissage spécial à la conduite de ce véhicule s'il sait conduire une automobile classique. Les dimensions de ce quadrilatère sont aussi un avantage en cas de freinage d'urgence car la marge de sécurité est plus grande que celle correspondante au triangle de sustentation des véhicules à trois roues, dont les dimensions, pour une largeur de voie identique, sont plus faibles.

De manière avantageuse, les moyens d'équilibrage sont aptes à commander l'inclinaison du véhicule suivant une valeur d'inclinaison différente de la valeur d'inclinaison idéale et préférentiellement inférieure, tout en assurant l'équilibre du véhicule. L'inclinaison idéale est ici définie comme étant telle que la résultante des forces appliquées au centre de gravité du véhicule ou de la partie inclinable du véhicule passe par l'axe de symétrie longitudinal du polygone de sustentation du véhicule.

Avantageusement, les moyens d'équilibrage comportent d'une part des moyens de détection de l'accélération transversale résiduelle à laquelle le véhicule est soumis et d'autre part des moyens de blocage de l'inclinaison du véhicule en fonction de l'accélération transversale résiduelle et au moins dans le sens de cette accélération transversale résiduelle.

Dans le cas où l'inclinaison réelle est plus faible que l'inclinaison idéale, on peut décomposer la résultante des forces en une force selon l'axe réel qui plaque le véhicule sur le sol et une force transversale résultante (FTR) qui est perpendiculaire à l'axe de l'inclinaison réelle. Cette force FTR correspond à une accélération transversale résiduelle (ATR) qui lui est proportionnelle.

Avantageusement, les moyens de limitation de l'inclinaison servent à limiter l'inclinaison quelque soit la vitesse. Ces moyens peuvent en outre limiter l'inclinaison à une valeur maximale plus faible à vitesse réduite qu'à grande vitesse, pour améliorer le comportement dynamique du véhicule. Avantageusement, lesdits moyens d'équilibrage comprennent des moyens faisant varier l'importance de l'effort devant être exercé par le conducteur pour obtenir l'inclinaison en fonction de la vitesse du véhicule de telle sorte qu'à faible vitesse, l'effort soit plus important qu'à grande vitesse.

Suivant une version plus automatisée des moyens d'équilibrage, ceux ci, comportent un servomécanisme commandant l'inclinaison du châssis et des roues. Selon un mode de réalisation particulièrement avantageux du véhicule selon l'invention, le même servomécanisme sert également à constituer les moyens de blocage de l'inclinaison en particulier à l'arrêt et à vitesse réduite.

Un système calculateur commande avantageusement les moyens d'équilibrage du véhicule en fonction d'un programme d'asservissement dont le mode de fonctionnement est avantageusement laissé au choix du conducteur. Préférentiellement, un premier mode de fonctionnement interdit l'inclinaison par rapport à la verticalité quand le véhicule roule à une vitesse inférieure à un premier seuil de vitesse prédéterminé, et un second mode de fonctionnement commande automatiquement l'inclinaison en asservissement à une valeur de consigne calculée pour être optimale tant que l'inclinaison n'a pas atteint la valeur maximale en fonction de la vitesse ou tant que l'accélération transversale résiduelle est inférieure à un seuil ou tant que la dérivée de l'accélération transversale résiduelle est inférieure à un autre seuil.

Suivant une version simplifiée du système automatique d'équilibrage du véhicule selon l'invention, la valeur de l'angle d'inclinaison du véhicule commandée par le servomécanisme correspond à un pourcentage fixe prédéterminé de la valeur de l'angle d'inclinaison idéale tel qu'on l'a défini ci-dessus, au moins jusqu'à un premier seuil d'inclinaison, avantageusement fonction de la vitesse du véhicule.

Pour pouvoir redresser le véhicule, en particulier à l'arrêt le véhicule selon l'invention est équipé de moyens de redressement s'il n'est pas dans la position verticale. Pour activer ces moyens de redressement, le conducteur dispose d'un moyen de déblocage du moyen de blocage à l'arrêt. Dans le cadre d'un mode de réalisation préféré du véhicule objet de l'invention, les moyens d'équilibrage comportent, des triangles superposés, et de manière avantageuse, une came montée articulée par une première extrémité sur le châssis du véhicule, ainsi que deux ressorts amortisseurs dont l'une des extrémités est fixée d'un côté ou de l'autre du châssis sur l'un des triangles de l'essieu, préférentiellement le plus bas et au plus près du moyeu de la roue pour une efficacité maximale desdits ressorts amortisseurs. Les autres extrémités des deux ressorts amortisseurs sont montées articulées directement sur la came, de préférence de manière telle que l'axe de chacun des ressorts amortisseurs reste le plus possible suivant une direction verticale. Ainsi, les ressorts amortisseurs absorbent au mieux les chocs quand les roues rencontrent des imperfections de la route (trous et bosses par exemple).

Suivant un premier mode de réalisation, on prévoit de réaliser le véhicule de telle manière que l'essieu ne permette pas d'incliner les roues arrière. Dans ce cas, le véhicule présente une partie arrière qui ne s'incline pas.

Avantageusement, suivant un second mode de réalisation, on prévoit de réaliser le véhicule de telle manière que les moyens d'équilibrage assurent l'inclinaison simultanée des quatre roues. Pour ce faire, le véhicule comporte préférentiellement, en partie arrière du véhicule, deux triangles superposés et une seconde came arrière, avantageusement similaire à la came montée à l'avant du véhicule et avantageusement fixée de manière similaire à elle aux ressorts amortisseurs en partie arrière dudit véhicule. Dans le cadre de ce mode de réalisation, l'inclinaison du châssis entraîne automatiquement l'inclinaison des quatre roues. Dans un mode de réalisation avantageux, on prévoit d'utiliser des bras tirés au lieu des triangles superposés en gardant la came ou une came similaire.

Pour une meilleure tenue de route, il est vivement recommandé d'utiliser un différentiel pour entraîner les roues motrices par l'intermédiaire de mécanismes poulies/courroies ou chaîne/engrenage, ou même de cardans. Cependant, pour réduire les coûts et vu la faible voie du véhicule, l'entraînement peut se faire par une seule roue.

Dans le cadre d'un mode de mise en oeuvre préféré de l'invention, le véhicule est équipé d'au moins une porte coulissante occupant une moindre place à son ouverture au voisinage du véhicule. Cette réalisation particulière de la porte permet également d'éviter le basculement du véhicule. En effet, le véhicule étant de faible largeur son polygone de sustentation est plus petit que celui d'une automobile classique. Si la porte du véhicule était montée pivotante autour d'un axe vertical, comme il est en soi classique, à cause de son poids la porte en position ouverte pourrait décaler le centre de gravité du véhicule hors du polygone de sustentation, ce qui déséquilibrerait le véhicule, surtout si quelqu'un appuie sur la porte ouverte.

Par ailleurs, il est avantageusement prévu de placer le groupe motopropulseur sous un siège du véhicule. Ceci permet notamment de réduire au mieux la longueur du véhicule, pour par exemple libérer un espace de rangement à l'arrière du véhicule. Dans le cas d'un véhicule selon l'invention comportant deux sièges, il est avantageux de placer le groupe motopropulseur sous le siège passager arrière.

Dans le cas d'un véhicule électrique, il est avantageux de placer un moteur dans chaque roue motrice. Cela réduit de façon substantielle la mécanique du groupe motopropulseur, par suppression du différentiel, des arbres de roues et des cardans éventuels. Dans ce cadre, il est avantageux de placer l'alimentation électrique sous les sièges, que ce soit batteries ou piles à combustible.

Dans le cadre d'un mode de réalisation particulier du véhicule selon l'invention, on prévoit que le poste de conduite comporte deux sièges avant et arrière, placés l'un derrière l'autre, pour accueillir un conducteur à l'avant et un passager à l'arrière (ou deux enfants). Chacun des deux sièges peut comporter une assise et un dossier qui sont avantageusement indépendants. Dans le cadre d'un mode de réalisation avantageux, on prévoit que les assises des deux sièges soient réalisées solidaires. Il est avantageux que le dossier du siège du conducteur soit monté pivotant autour d'un axe préférentiellement vertical pour être rabattu contre la carrosserie, de manière à livrer passage audit passager vers le siège arrière. Il est également prévu des moyens permettant de bloquer le dossier du siège en position de conduite pour éviter un éventuel mouvement du dossier lorsque, par exemple, le conducteur fait subitement ralentir le véhicule.

Avantageusement, le dossier du siège arrière est monté mobile en translation, pour être appliqué contre le dossier du siège avant, dans le cas où il n'y a pas de passager, afin de libérer un espace de rangement plus important à l'arrière du véhicule.

Dans le cadre de ce mode de réalisation avantageux, on prévoit d'équiper le dos de dossier du siège arrière d'un plateau mobile, qui est avantageusement monté pivotant, ce de manière à basculer entre une position où il constitue un fond de coffre du véhicule couvrant l'assise du siège arrière, pour protéger l'assise notamment, quand le dossier dudit siège arrière est placé contre le dossier dudit siège avant, et une position où le plateau s'applique contre le dos du dossier.

Avantageusement, la carrosserie du véhicule constitue une cabine de protection d'au moins une personne installée dans le véhicule. De cette manière, le conducteur installé dans le poste de conduite est complètement à l'abri des intempéries. Dans le cadre de ce mode de réalisation, il est avantageux de réaliser la cabine avec une forme telle que sa largeur en partie haute soit plus petite que sa largeur la plus grande. De cette manière, l'espace que prend le véhicule en largeur est réduit au niveau de la partie supérieure de la carrosserie, et ceci permet au véhicule de s'insérer plus facilement entre les voitures dans les zones embouteillées, même quand il s'incline. Enfin, cela permet également de monter les rétroviseurs en partie haute de la carrosserie, de sorte qu'ils ne soient pas en saillie de la carrosserie pour que la largeur du véhicule ne soit pas plus large que celle de la carrosserie.

Par ses différentes caractéristiques, telles qu'elles ont été ci-avant ou qu'elles seront plus loin définies, décrites et illustrées, et telles qu'elles peuvent être avantageusement appliquées dans la pratique industrielle, l'invention permet notamment de mettre à disposition des conducteurs un véhicule :
- qui peut se garer facilement en ville et qui circule facilement entre les automobiles dans les embouteillages, du fait de ses dimensions réduites ;
- qui est stable dans les virages ou sur les terrains accidentés en autorisant l'inclinaison des roues et du châssis du véhicule ;
- qui, en cas de freinage d'urgence, ne se couche pas sur le sol (contrairement aux véhicules à deux roues) ;
- qui se conduit de façon intuitive par inclinaison du poste de conduite ce qui se fait de manière naturelle dans les virages, suivant le mode de réalisation sans asservissement ;
- qui offre une protection du conducteur (et de son passager suivant le mode de réalisation) en cas d'accident ou de choc, ou aussi en cas d'intempéries suivant le mode de réalisation ;
- qui, du fait de son inclinaison limitée, offre l'avantage dans le trafic automobile par rapport aux véhicules à deux roues qui doivent impérativement s'incliner fortement pour rester stables dans les changements de direction rapides.

L'invention sera maintenant plus complètement décrite dans le cadre de caractéristiques préférées et de leurs avantages, en faisant référence aux figures 1 à 10 parmi lesquelles :
- la figure 1 représente, en perspective, un modèle de véhicule selon l'invention comportant une carrosserie de protection qui est incliné sur sa gauche et dont les roues avant sont tournées et inclinées vers sa gauche ;
- la figure 2 illustre le véhicule selon l'invention représenté en figure 1, dans lequel se tient un conducteur, en vue de côté ;
- la figure 3 illustre, en vue de face, un véhicule selon l'invention dont la structure de protection comporte une carrosserie non fermée et dont les roues sont droites ;
- la figure 4 montre le véhicule représenté en figure 3, en vue de face, dont les roues et le poste de conduite sont inclinés vers sa droite ;
- la figure 5 montre le véhicule selon l'invention de la figure 1 en vue de dessus ;
- la figure 6 montre le véhicule selon l'invention de la figure 1 dont la porte est ouverte, en vue de dessus ;
- la figure 7 est une vue partielle d'un véhicule selon l'invention qui est muni d'un premier mode de réalisation de moyens de redressement ;
- la figure 8 est une vue partielle d'un véhicule selon l'invention qui est muni d'un deuxième mode de réalisation de moyens de redressement ;
- la figure 9 est une vue schématique d'un véhicule selon l'invention dont un côté est stationné ou circule sur un trottoir ;
- et la figure 10 une vue schématique d'un véhicule selon l'invention quand il circule dans un virage serré ou pris rapidement.

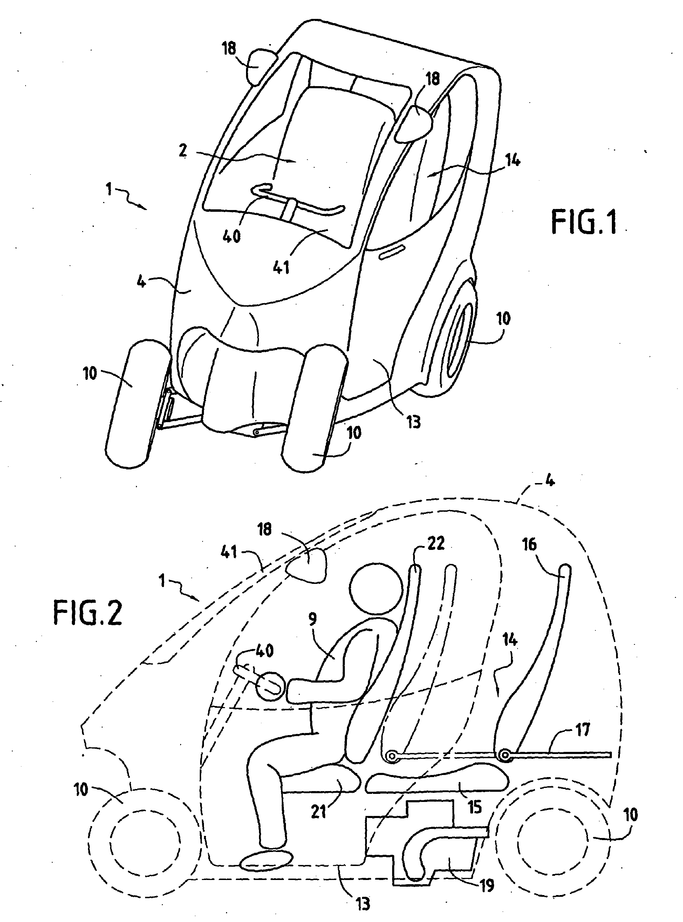

Comme l'illustre la figure 1, l'invention concerne un véhicule motorisé 1 qui comporte une structure de protection du conducteur, constituée par une carrosserie 4 complètement fermée. Il comporte quatre roues 10 et on prévoit que les deux roues 10 montées à l'avant du véhicule soient directrices et que les deux roues 10 montées à l'arrière du véhicule soient motrices. Le véhicule motorisé 1 comporte un groupe motopropulseur 19 (représenté en figure 2), le moteur (ou les moteurs) du groupe motopropulseur 19 pouvant être de type thermique, électrique, pneumatique, hybride ou autre.

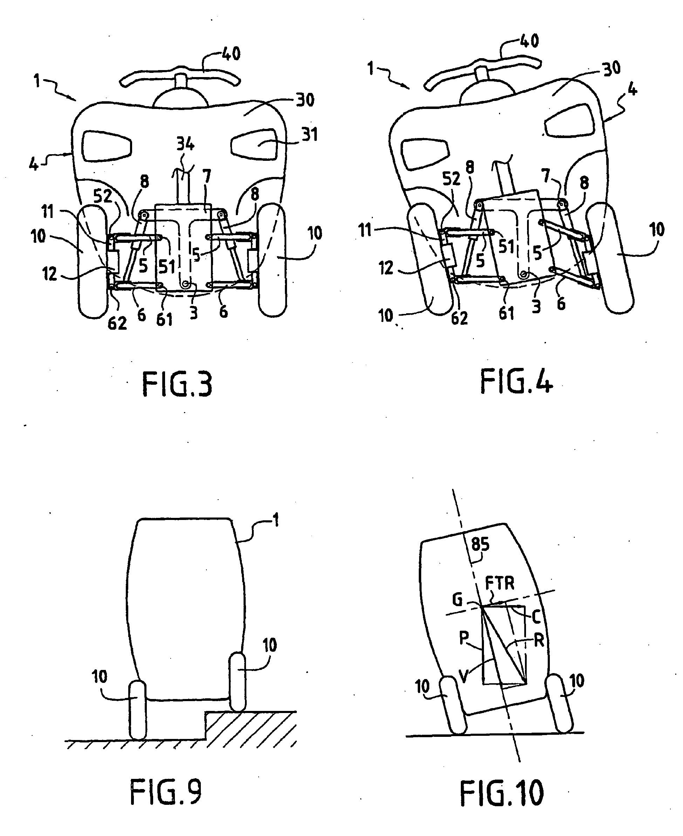

Le véhicule comporte un siège conducteur 2 qui présenté une assise 21 et un dossier 22 (figure 4). Le siège conducteur 2 est compris dans un poste de conduite de dimensions telles qu'il ne peut accueillir en largeur qu'une seule personne 9 (représentée en figure 2). La voie du véhicule, c'est à dire la distance entre les plans respectifs des deux roues avant 10 (ou les plans respectifs des deux roues arrières), peut ainsi être comprise entre 50 cm et 100 cm. Avantageusement, dans le cadre de ce mode de réalisation, le véhicule présente une voie de 60 cm permettant une circulation entre deux automobiles, compte tenu de la largeur que présente la plupart des voies de circulation dans les villes.

On a représenté sur les figures 2, 5 et 6 l'intérieur d'un véhicule selon l'invention conçu pour accueillir un passager en plus du conducteur. Le poste de conduite comporte ainsi deux sièges : un siège avant 2 et un siège arrière 14, les deux sièges 2 et 14 étant placés l'un derrière l'autre pour accueillir un conducteur à l'avant et un passager à l'arrière.

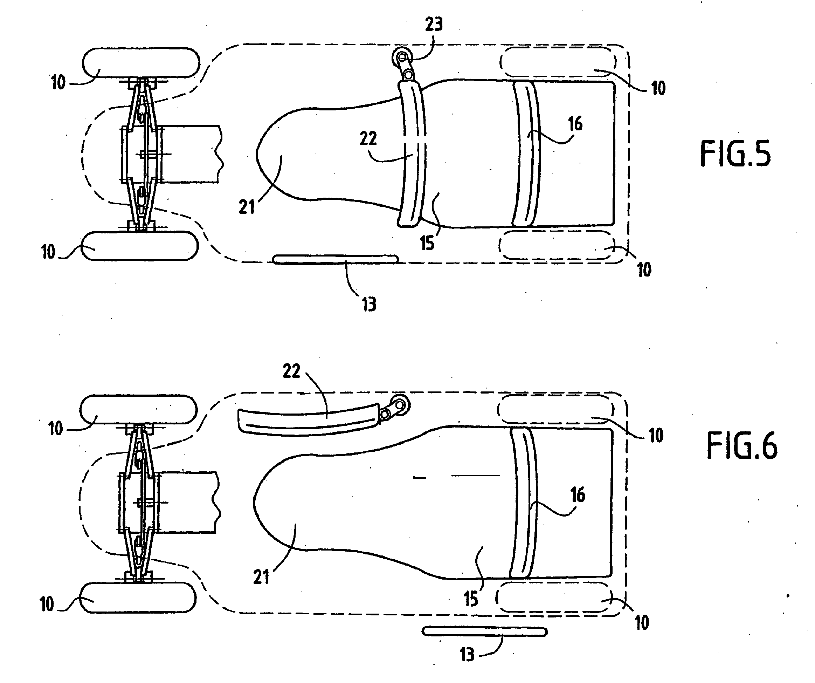

Chacun des deux sièges comporte une assise et un dossier. Aussi, tout comme le siège avant 2, le siège arrière 14 comporte une assise 15 et un dossier 16. Comme on peut le voir sur les figures 5 et 6, les assises 21 et 15 peuvent être réalisées en une seule pièce. Elles peuvent être réalisées séparées également, comme l'illustre la figure 2.

De manière à livrer passage au passager vers le siège arrière, on prévoit que le dossier 22 du siège 2 du conducteur soit monté pivotant autour d'un axe qui, dans ce mode dé réalisation, est vertical, pour être rabattu contre la carrosserie interne du véhicule. Pour ce faire, le dossier 22 du siège avant 2 comporte latéralement un bras 23 monté pivotant par une charnière sur un montant solidaire de la carrosserie du véhicule, à l'intérieur du poste de conduite.

De l'autre côté du siège, à l'opposé du bras 23, la carrosserie interne est équipée de moyens de fixation du dossier du siège (non représentés sur la figure), de manière à maintenir le dossier du siège en position fixe quand le véhicule est utilisé.

Concernant le siège arrière 14, son dossier 16 est monté mobile en translation le long d'au moins un rail longitudinal (non représenté). De cette manière, le dossier 16 du siège arrière 14 peut être disposé contre le dossier 22 du siège avant 2, afin de libérer un espace de rangement plus important à l'arrière du véhicule, dans le cas où le véhicule n'accueille pas de passager.

De plus, on prévoit d'équiper le dossier 16 du siège arrière 14 d'un plateau 17. Le plateau 17 est monté pivotant sur le dos du dossier 16, autour d'un axe parallèle au plan du dossier 16. Il constitue un fond de coffre du véhicule quand il est en position ouverte et quand le dossier 16 du siège 14 se trouve dans une position telle qu'un passager peut s'asseoir. Quand le plateau est ouvert et que le dossier 16 du siège 14 se trouve en appui contre le dossier 22 du siège avant, le plateau 17 couvre l'assise 15 du siège arrière 14 de manière à offrir une surface plane plus commode pour poser des objets. Le plateau 17 est également un moyen de protection de l'assise 15.

Le poste de conduite est réalisé solidaire d'un châssis 3 (figures 3 et 4) qui est intégré à la carrosserie 4 de protection du conducteur. On comprendra par "intégré" le fait que le châssis 3 et la carrosserie 4 sont fixés ensemble.

De manière avantageuse, le châssis 3 comporte deux arceaux qui se placent respectivement à l'avant et à l'arrière du véhicule, et qui sont reliés entre eux par au moins une liaison, de telle sorte que l'ensemble soit assez rigide pour résister notamment aux forces de poussée, de torsion et de traction qu'il subit pendant la conduite du véhicule. L'ensemble peut aussi servir de protection en cas de renversement du véhicule. On prévoit également que le châssis 3 soit équipé d'un ensemble de protection des chocs en cas d'accident, du type "crash box", au moins à l'avant du véhicule.

Comme on peut le voir sur la figure 1, la carrosserie 4 est réalisée de manière telle qu'elle constitue une cabine de manière à protéger le conducteur des intempéries, ladite cabine comportant sur les côtés du véhicule des renforts destinés à protéger au moins les jambes du conducteur en cas de basculement latéral du véhicule ou en cas de choc. De plus, la carrosserie 4 est équipée à l'avant du véhicule d'un pare-brise 41.

Pour plus de stabilité, le véhicule 1 est conçu de telle manière que son poids soit concentré assez près du sol. Pour ce faire, on prévoit notamment que la carrosserie présente une largeur plus faible dans sa partie supérieure que dans sa partie la plus large. Le véhicule occupe ainsi moins de place. De plus, ceci permet de placer les rétroviseurs 18 en partie supérieure de la carrosserie, sans que le véhicule occupe une largeur plus importante sur une voie de circulation que la largeur occupée par sa carrosserie en partie inférieure. Par ailleurs, on prévoit de monter le groupe motopropulseur 19 sous un siège ; plus particulièrement, le groupe motopropulseur 19 est placé sous l'assise 15 du siège passager 14 (figure 2). Cette disposition permet aussi de libérer un espace de rangement à l'arrière du véhicule.

Pour accéder au moteur, on peut prévoir d'équiper la carrosserie du véhicule de trappes latérales. On peut aussi prévoir de monter escamotable l'assise 15 du siège 14. Ni les trappes, ni les moyens permettant d'escamoter l'assise 15 n'ont été représentés sur les figures.

Selon l'invention, le véhicule 1 comporte des moyens d'équilibrage qui sont opérationnels dans les virages et sur sol incliné par rapport à l'horizontale et qui fonctionnent par inclinaison simultanée du châssis 3 solidaire du poste de conduite du véhicule et d'au moins les deux roues avant 10 du véhicule. Les moyens d'équilibrage sont associés au châssis 3. Pour plus de stabilité du véhicule 1 lorsque les roues avant 10 s'inclinent, on prévoit que les roues 10 soient des roues telles qu'elles présentent au moins une bande de roulement ovale, telles que des roues de moto. De plus, on prévoit que l'angle d'inclinaison des roues avant 10 et celui du châssis par rapport à un plan vertical soient égaux, ceci afin d'assurer une stabilité optimale du véhicule 1 dans les virages.

Dans le cadre de ce mode de réalisation, on prévoit que le véhicule soit équipé d'un guidon 40 (figure 1, 2, 3 et 4). En effet, il a été constaté que le conducteur provoque, de manière plus intuitive, l'inclinaison du poste de conduite en équilibrage du véhicule quand le véhicule est équipé d'un guidon 40 plutôt que quand le véhicule est équipé d'un volant. Cependant, on peut aussi prévoir que les moyens de direction du véhicule soient constitués par un volant, en particulier quand le véhicule comporte une carrosserie de protection fermée du type des carrosseries d'automobile, ou quand l'inclinaison est réalisée automatiquement par un servomécanisme.

Le véhicule 1 comporte aussi des moyens pour bloquer l'inclinaison des deux roues avant 10 et du châssis 3 lorsque le véhicule est à l'arrêt ou lorsque le véhicule roule à faible vitesse. Les moyens bloquant l'inclinaison des roues 10 consistent en un dispositif de commande qui, en présence d'une vitesse nulle ou faible, bloque l'inclinaison du châssis 3, à la valeur d'angle d'inclinaison présente au moment du blocage.

Le véhicule 1 est également équipé de moyens pour limiter à une valeur maximale l'angle d'inclinaison. Cette limitation peut être variable en fonction de la vitesse.

Cette limitation est telle que, si même dans le cas où le mécanisme de blocage ne fonctionne plus, ou s'il n'est pas utilisé, le véhicule ne puisse basculer, en particulier à l'arrêt. Cela peut être réalisé à l'aide d'une butée mécanique. Au contraire, à plus grande vitesse, cette butée peut être décalée pour permettre une inclinaison maximale plus importante, comme cela peut être utile pour améliorer le comportement dynamique dudit véhicule.

Les figures 3 et 4 concernent un véhicule dont la structure de protection est constituée par une carrosserie plus large que les jambes du pilote et les protégeant, et par un bouclier 30 muni de deux projecteurs 31. La colonne de direction 34, qui est reliée au guidon 40, traverse le bouclier 30 de manière à pouvoir pivoter par rapport à ce dernier.

Comme on peut le voir sur ces figures 3 et 4, les moyens assurant l'équilibrage du véhicule 1 par inclinaison des roues avant 10 et du châssis 3 sont constitués par deux parallélogrammes articulés reliant le châssis et les roues avant et permettant d'incliner le châssis et les roues avant du véhicule, simultanément et d'un angle sensiblement égal., grâce à la came 7. On peut également prévoir un dispositif similaire pour réaliser l'inclinaison des roues arrières, les moyens d'équilibrage comportant alors la même came 7.

Ces parallélogrammes articulés sont disposés de part et d'autre du châssis 3. Ils comportent deux bras 5 et 6 qui, par l'une de leurs extrémités, 51 et 61, sont montés pivotants sur le châssis en partie avant du véhicule, et qui, par l'autre de leurs extrémités, 52 et 62, sont montés pivotants dans un élément 11 fixé au moyeu 12 de chacune des roues avant 10. Les bras 5 et 6 forment ainsi un essieu articulé à quatre bras (deux bras 5 et deux bras 6) assurant l'inclinaison simultanée des deux roues avant 10 et dudit châssis 3 solidaire du poste de conduite du véhicule 1.

Dans le mode de réalisation suivant l'invention décrit ici, une came 7 en forme de T est montée articulée par une première extrémité sur le châssis 3 à l'avant du véhicule. Deux ressorts amortisseurs 8 du type suspension sont fixés chacun par l'une de leurs extrémités, d'un côté ou de l'autre du châssis 3, sur l'un des bras de l'essieu. Préférentiellement, ils sont fixés sur le bras 6 en position la plus basse par rapport au sol et au voisinage de la roue 10, pour une efficacité maximale d'amortissement. Les autres extrémités des deux ressorts amortisseurs 8 sont montées articulées sur les autres extrémités de la came 7, de préférence de manière telle que les axes des ressorts amortisseurs 8 restent le plus possible perpendiculaires à un plan horizontal. Ainsi placés, les ressorts amortisseurs 8 assurent une absorption optimale des chocs lorsque, par exemple, le véhicule roule sur un terrain accidenté, ou lorsqu'il descend d'un trottoir.

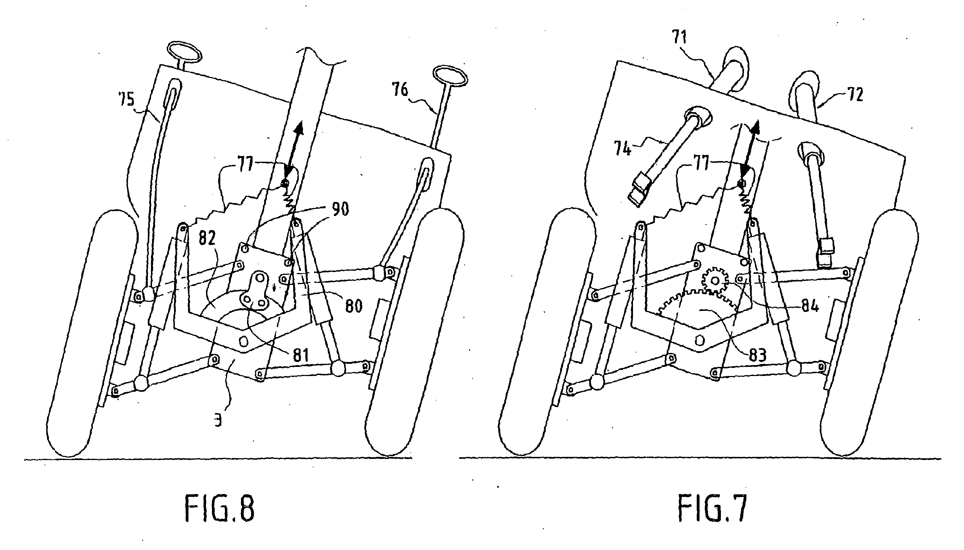

Avantageusement, la came 7 présente une forme de T, comme représenté sur les figures 3 et 4, ou en forme de lyre ouverte, comme représenté sur les figures 8 et 9 (référencé 80), pour faire de la place au centre. Les moyens de blocage d'inclinaison du véhicule suivant l'invention sont conçus pour bloquer l'inclinaison quand le véhicule est à l'arrêt ou proche de l'arrêt. Dans le mode de réalisation particulier considéré, ils consistent essentiellement en un frein qui bloque la came 7 dans sa position en cours. Avantageusement, le mécanisme du frein est fixé au châssis, et soit la partie à bloquer est fixée solidaire de la came 7, soit elle constitue une partie de cette dernière.

Le frein est représenté sur les figures 7 et 8. Sur la figure 8, le frein comporte une mâchoire 81 qui est solidaire du châssis du véhicule et une partie solidaire de la came en forme de lyre 80, qui est constituée par un secteur de disque 82 qui peut être bloqué par la mâchoire 81, ce qui bloque l'inclinaison du véhicule. La figure 7 représente un autre mode de réalisation du frein de blocage de l'inclinaison. Dans ce cas, un système d'engrenage 83 est solidaire de la lyre 80. Il coopère avec un pignon 84 qui est fixé à rotation sur le châssis.

Dans le cadre des modes de mise en oeuvre préférés de l'invention, il est prévu que l'actionnement du frein soit commandé automatiquement quand le véhicule est ralenti à une vitesse seuil inférieure pour être arrêté, et quand il est arrêté, pour bloquer l'inclinaison du véhicule. Parallèlement, il est prévu que le relâchement du frein soit commandé automatiquement quand le véhicule est démarré, soit dès le démarrage soit à partir d'une certaine vitesse.

Ce frein peut être avantageusement utiliser pour bloquer l'inclinaison du véhicule lorsque l'accélération transversale résiduelle (ATR) n'est pas nulle empêchant ainsi le véhicule de se redresser dans le sens de la force centrifuge et risquer de basculer dans ce sens.

Le véhicule illustré sur la figure 1 est conçu de telle manière que les moyens d'équilibrage assurent l'inclinaison simultanée des quatre roues 10. Pour ce faire, le véhicule 1 comporte également en partie arrière deux bras qui sont articulés deux à deux de part et d'autre du châssis 3, ainsi qu'une seconde came fixée sur l'arrière du châssis 3, la seconde came étant similaire à la came avant 7 et étant fixée de manière similaire en partie arrière dudit véhicule sur le châssis 3.

Il est aussi possible d'utiliser des roues arrière tirées, tenues par des bras parallèles au châssis en utilisant le même type de came 7.

Egalement, on prévoit d'équiper le véhicule 1 d'un système assurant automatiquement l'inclinaison du véhicule 1. Ce système, non représenté sur les figures, comporte notamment des moyens pour commander l'inclinaison réelle du véhicule de manière telle qu'il ne soit pas déséquilibré. Un calculateur a pour fonction de renseigner le système qui commande l'inclinaison du véhicule suivant les informations qui lui sont fournis, par exemple à partir de la valeur de l'ATR.

On prévoit que le conducteur puisse également donner des instructions au système en fonction de ses habitudes de conduite. Par exemple, le conducteur peut renseigner le système à l'aide d'un boîtier équipé d'un curseur pouvant être déplacé suivant plusieurs positions, chaque position du curseur correspondant à un type de conduite prédéterminée.

La surface qu'offre le polygone de sustentation au sol permet que l'angle d'inclinaison idéale ne soit respecté qu'avec un certain degré d'imprécision sans que cela joue sur la stabilité du véhicule dans les virages, contrairement au cas des véhicules à deux roues qui nécessitent une très grande précision sous risque de chute immédiate.

Le système est avantageusement conçu de telle manière qu'il peut corriger automatiquement l'inclinaison du véhicule.

Pour ce faire, le calculateur détermine l'angle d'inclinaison idéale du véhicule en fonction des différents paramètres qu'il prend en compte (notamment le poids en charge du véhicule, sa vitesse et l'inclinaison du sol sur lequel le véhicule repose par rapport à l'horizontale), et il compare cet angle d'inclinaison idéale avec l'angle d'inclinaison réelle des roues, du châssis et du poste de conduite. Un asservissement commande l'inclinaison du véhicule de telle sorte qu'elle corresponde au choix du conducteur.

De nombreuses solutions intermédiaires sont envisageables. En particulier, le système peut commander l'inclinaison des roues, du poste de conduite et du châssis suivant les renseignements que le conducteur lui donne. Le conducteur peut choisir que le système ne corrige l'inclinaison du véhicule qu'à partir d'un certain écart relevé entre l'angle d'inclinaison réelle et l'angle d'inclinaison idéale.

Les moyens permettant au système de déterminer l'angle d'inclinaison idéale peuvent consister en une combinaison d'éléments tels qu'un accéléromètre, ou un galvanomètre dont l'aiguille est solidaire d'un pendule légèrement amorti pour réduire les oscillations indésirables.

Pour que le conducteur puisse accéder à l'intérieur du véhicule 1, ce dernier est équipé d'au moins une porte coulissante 13. La porte 13 réalisée coulissante permet au véhicule d'occuper moins de place au voisinage du véhicule quand elle est ouverte qu'un véhicule équipé d'une porte monté pivotante, comme il est classique en soi. De plus, le choix de la porte coulissante 13 offre l'avantage de ne pas déséquilibrer le véhicule à l'ouverture de la porte, le véhicule pouvant basculer sous l'effet du poids d'une porte pivotante.

Le véhicule 1 comporte un dispositif permettant d'ouvrir ou d'entrouvrir la porte quand le véhicule roule respectivement à faible allure, ou à moyenne ou grande vitesse. La carrosserie est équipée pour ce faire de moyens de blocage de la porte en position entrouverte, ces moyens de blocage pouvant se déclencher automatiquement à partir d'une vitesse prédéterminée du véhicule pour une question de sécurité. Suivant ce mode de réalisation, la porte peut ne pas être équipée de fenêtre.

Les figures 7 et 8 sont des vues partielles d'un véhicule selon l'invention qui est incliné, par exemple dans un virage. Ce véhicule comporte des moyens de redressement pour permettre de redresser aisément le véhicule s'il n'est pas dans la position verticale.

Selon un premier mode de réalisation qui est représenté sur la figure 7, les moyens de redressement sont constitués par deux pédales 71 et 72 qui peuvent coulisser à travers une paroi interne 73 du véhicule. L'extrémité inférieure de chaque pédale comporte une sorte de fourche 74, qui vient effleurer l'extrémité 52 du bras supérieur 5 horizontal du parallélogramme d'équilibrage, au voisinage du moyeu de la roue lorsque ledit bras est dans la position la plus haute. Quand le conducteur veut redresser le véhicule, il appuie sur la pédale disposée du côté abaissé du véhicule, ce qui correspond à un geste instinctif ; il peut ainsi redresser le véhicule et le remettre en position verticale. L'action sur une pédale de redressement peut débloquer automatiquement le moyen de blocage sans que le pilote ait une autre quelconque manoeuvre à réaliser pour ce déblocage permettant le redressement du véhicule, ou bien ce déblocage est réalisé à l'aide d'une autre commande manuelle, telle qu'un bouton poussoir accessible au pilote. La pédale ainsi actionnée appuie sur l'extrémité 52 du bras 5 qui est disposé du côté abaissé du véhicule, ce qui exerce une force sensiblement verticale dirigée vers le bas qui tend à remettre le parallélogramme déformable dans la position normale correspondant sensiblement à un rectangle de la figure 3.

Selon un deuxième mode de réalisation, qui est représenté sur la figure 8, ces moyens de redressement sont constitués par deux tringles 75 et 76 qui peuvent coulisser à travers le plancher avant 73 du véhicule. L'extrémité inférieure de chaque tringle est fixée sur l'extrémité 52 du bras supérieur 5 horizontal du parallélogramme d'équilibrage, au voisinage du moyeu de la roue. Quand le conducteur veut redresser le véhicule, il tire sur la tringle disposée du côté relevé du véhicule, ce qui correspond également à un geste instinctif, pour redresser le véhicule et le remettre dans la position verticale.

Cette action sur la tringle tire sur l'extrémité 52 du bras 5 qui est du côté relevé du véhicule et exerce une force sensiblement verticale dirigée vers le haut qui tend à remettre le parallélogramme déformable dans la position normale correspondant sensiblement à un rectangle de la figure 3.

On peut aussi prévoir une variante de réalisation qui utilise deux pédales similaires aux pédales 71 et 72 de la figure 7, qui sont prévues pour être manoeuvrées chacune en tirant sur le bras 5 disposé du côté opposé à la pédale concernée. De cette manière, on peut obtenir une action dirigée verticalement sur le bras, au lieu d'une action selon un axe incliné comme c'est le cas dans le mode de réalisation de la figure 7. Ceci permet de diminuer la course utile de la pédale. Il faut noter que l'action exercée par le pied sur une pédale permet d'obtenir une force plus grande que celle exercée par le bras en tirant sur une tringle.

Par ailleurs, on peut également prévoir des modes de réalisation des moyens de redressement qui utilisent des actuateurs électriques ou hydrauliques, par exemple des vérins.

De la même manière qu'il n'est pas nécessaire, pour incliner le véhicule et les quatre roues, d'incliner à la fois les roues avant et les roues arrière et qu'il suffit d'incliner le châssis; il n'est pas besoin de mettre des moyens de redressement à l'avant et à l'arrière. Il est même préférable de les mettre à l'avant seulement, car ils sont plus efficaces avec la chasse qu'il est nécessaire d'appliquer au train avant.

Sur les figures 7 et 8 on a représenté des moyens de redressement qui permettent de redresser le véhicule s'il n'est pas dans la position verticale. Ils sont constitués par deux ressorts, par exemple des ressorts hélicoïdaux 77 dont l'extrémité supérieure est fixée à articulation sur une partie du châssis 3 et l'extrémité inférieure est fixée à l'extrémité supérieure du ressort amortisseur 8. En particulier à l'arrêt, ces moyens de redressement remettent lentement le véhicule dans une position verticale symétrique qui peut être ensuite bloquée.

Sur les figures 7 et 8, on a représenté par une double flèche le fait que le point de fixation des ressorts 77 peut être déplacé verticalement entre deux positions limitées, par exemple au moyen d'un vérin. Quand on déplace ce point de fixation vers le haut, on tend les ressorts 77, ce qui peut être utile pour augmenter l'effort devant être exercé par le conducteur pour obtenir l'inclinaison, en fonction de la vitesse, de telle sorte qu'à faible vitesse, l'effort soit plus important qu'à grande vitesse.

Les figures 9 et 10 illustrent certains avantages du véhicule selon l'invention par rapport à des véhicules ne comportant pas de moyens d'équilibrage conformément à la présente invention. Dans le cas de la figure 9, un côté du véhicule est sur un trottoir, en circulation ou en stationnement. Les moyens d'équilibrage permettent de maintenir le véhicule verticale de telle sorte qu'il n'y a pas de risque de basculement sur le côté opposé au trottoir, même si le véhicule est de faible largeur.

Le cas de la figure 10 est celui où le véhicule circule et prend un virage serré ou prend un virage rapidement. Du fait de l'inclinaison prise par le véhicule 1, la résultante R des forces appliquées au centre de gravité G du véhicule, en fonction notamment de son poids en charge P, de sa vitesse et de l'inclinaison du sol sur lequel le véhicule repose (donc de la force centrifuge C qui en résulte, orientée horizontalement), ainsi que de la force éventuelle du vent, passe par le polygone de sustentation du véhicule, c'est-à-dire entre les quatre roues du véhicule.

Selon une caractéristique de l'invention, on limite avantageusement l'inclinaison du véhicule à une valeur qui peut être inférieure à l'inclinaison dite idéale. L'inclinaison idéale du véhicule correspond au cas où la résultante R de la partie inclinable du véhicule passe par l'axe de symétrie longitudinal du polygone de sustentation du véhicule. Dans ce cas, il n'y a que la force R, qui tend à plaquer le véhicule vers le sol, et aucune force résiduelle ne tend à le faire basculer latéralement.

Sur la figure 10, on a représenté le cas où l'inclinaison réelle (axe 85) est plus faible que l'inclinaison idéale. Dans ce cas, on peut décomposer la résultante R en une force V selon l'axe 85 qui plaque le véhicule sur le sol et une force FTR qui est perpendiculaire à l'axe de l'inclinaison 85. Cette force FTR correspond à une accélération transversale résiduelle ATR qui lui est proportionnelle. Selon l'invention, on détecte ou on mesure cette accélération transversale résiduelle ATR pour commander et limiter l'inclinaison du véhicule. A cet effet; on prévoit un accéléromètre uni-axe, qui est solidaire du châssis, préférentiellement sur l'axe de symétrie du véhicule voire proche du centre de gravité moyen de la partie inclinable du véhicule et dont la sensibilité est orientée par exemple perpendiculairement au plan de symétrie du châssis.

Pour assurer le blocage d'inclinaison lors de l'apparition de la force d'accélération transversale résiduelle (FTR), on peut utiliser la valeur d'accélération ATR fournie par l'accéléromètre, et commander le blocage dès que cette valeur dépasse un seuil prédéterminé. Pour commander le déblocage, lorsque la force FTR diminue, on peut agir quand la valeur de l'accélération transversale résiduelle ATR mesurée par l'accéléromètre passe en dessous d'un second seuil prédéterminé (éventuellement différent du seuil de commande pour garder un hystérésis).

On peut également prévoir que le blocage réalisé lorsque l'ATR est supérieure au seuil, ne se fasse que dans le sens de cette accélération transversale résiduelle et que l'inclinaison puisse rester libre dans l'autre sens, ce qui permet d'une part au véhicule de ne pas se redresser dans le sens de l'ATR (du côté extérieur au virage) ce qui aurait pour résultat de risquer de le basculer et d'autre part de permettre au véhicule de s'incliner dans le sens opposé à l'ATR et réduire ainsi la valeur de l'ATR, ce au moins jusqu'à l'inclinaison maximale du véhicule.

Avantageusement, le blocage peut aussi être déclenché lorsque l'ATR augmente de manière soudaine ce qui se détecte en comparant la dérivée de l'ATR par rapport à un seuil prédéterminé. Ce phénomène a lieu par exemple dans le cas où le véhicule étant incliné sur un coté, le pilote commande une forte accélération au véhicule ce qui a comme résultat de redresser le véhicule et ensuite de le faire basculer dans le sens de l'ATR, ce qui s'arrête grâce au blocage de l'inclinaison. Dans une version de base du véhicule suivant l'invention, en l'absence de moyens automatiques d'équilibrage, seuls deux capteurs sont nécessaires. L'un pour détecter, voire mesurer la vitesse du véhicule, permettant de commander le déblocage du frein d'inclinaison à partir d'une certaine vitesse, L'autre est un accéléromètre qui est monté sur le châssis et qui détecte voire mesure l'ATR.

Par ailleurs, selon une variante de réalisation du véhicule de l'invention, tous les moyens de blocage sont combinés en un même frein, qui est normalement en position de blocage et qui n'est libéré que par les commandes automatiques de contrôle de l'inclinaison dans les limites fixées telles que décrites précédemment.

Dans une version plus élaborée, les différentes fonctions sont avantageusement commandées par des moyens automatiques, qui comprennent le détecteur précité, un calculateur et des moyens automatiques d'inclinaison du véhicule, tels qu'un vérin ou un pignon d'entraînement motorisé par un moteur (électrique notamment), lui-même commandé par l'asservissement et le calculateur (à partir de l'information d'ATR, par exemple). Dans ce cas, la butée qui fixe la limite de l'inclinaison peut être intégrée à un système d'engrenage, le secteur de roue dentée étant solidaire de la came 7 ou à la commande de vérin.

En autre variante, dans le cas de véhicule inclinant les quatre roues, on peut prévoir deux freins de blocage de l'inclinaison, un frein à l'avant et un à l'arrière, le frein avant bloquant l'inclinaison quand l'ATR (ou sa dérivée) est supérieure aux seuils prédéterminés, ainsi qu'à vitesse réduite, rendant le blocage plus doux du fait de la plus grande souplesse du train avant, le frein arrière et le frein avant bloquant ensemble l'inclinaison à l'arrêt d'une façon plus rigide. Enfin, sur la figure 8, on peut voir des butées fixes 90. Elles sont solidaires du châssis et limitent l'inclinaison relative entre châssis et came, et donc l'inclinaison du véhicule, à une valeur maximale.

La description qui précède explique clairement comment l'invention permet d'atteindre les objectifs qu'elle s'est fixés.

En particulier, on comprend comment, dans l'ensemble de sa conception et malgré sa faible largeur, le véhicule qui a été décrit en détail est très stable.

En particulier, on peut réaliser un véhicule de faible largeur, par exemple ayant une voie de l'ordre de 60 cm, dont le centre de gravité se situe à environ 60 cm au-dessus du plan de contact des roues avec le sol. A l'arrêt et à petite vitesse, l'inclinaison maximale est limitée par les moyens de limitation d'inclinaison à 18 degrés environ. Cette limite peut être portée à quelques 25 degrés pour une conduite à grande vitesse, correspondant à un angle de 45 degrés pour une moto ( qui est un angle très élevé).

Il ressort néanmoins de ce qui précède que l'invention n'est pas limitée aux modes de mise en oeuvre qui ont été spécifiquement décrits et représentés sur les figures.

En effet, et par exemple, le véhicule selon l'invention pourrait être équipé de deux portes. Cela permettrait au conducteur de stationner contre un mur sans avoir à se soucier de l'orientation du véhicule par rapport au mur pour pouvoir s'en extraire.

Egalement, on pourrait prévoir que la seconde porte soit montée de manière telle qu'elle offre un accès direct au siège passager arrière. Dans ce cas, il serait avantageux que la porte soit montée coulissante de l'arrière du véhicule vers l'avant du véhicule, de sorte qu'elle ne dépasse pas de la carrosserie à l'avant du véhicule quand elle est en position ouverte.

Plus simplement, dans le cas d'une porte unique, une ouverture de sécurité permettrait de sortir du véhicule en cas de basculement sur le côté de la porte, empêchant l'ouverture de ladite porte.

Enfin, il doit être compris que le véhicule selon l'invention peut être équipé de tous les objets de sécurité, tels que par exemple les ceintures de sécurité, les essuie-glaces, le système anti-patinage ou anti-blocage de roue. Le véhicule peut aussi être équipé d'accessoires tels que le chauffage, la climatisation, un toit ouvrant avec capote en toile ou capote rigide amovible, un poste de radio, un lecteur de cassette ou disques compacts, un système de guidage informatisé, une commande d'ouverture électrique des portes, tous autres accessoires de confort ou sécurité équipant les véhicules disponibles sur le marché. Le véhicule selon l'invention pourrait également se décliner en toutes versions du genre mini camionnette, véhicule de livraison, véhicule tout chemin ou tout terrain, véhicule de course.

## Revendications

1. Véhicule (1) motorisé de type à quatre roues (10), comportant :
- un siège conducteur (2) compris dans un poste de conduite n'accueillant en largeur qu'une seule personne, ledit poste de conduite étant solidaire d'un châssis (3) comportant une structure (4) de protection du conducteur,
- des moyens d'équilibrage associés audit châssis (3), permettant d'assurer l'équilibre du véhicule, dans les virages ou sur un sol incliné par rapport à l'horizontale, par inclinaison simultanée du châssis (3) et d'au moins les roues avant (10) dudit véhicule par rapport au sol,
**caractérisé en ce que** lesdits moyens d'équilibrage permettent l'inclinaison du véhicule suivant un angle d'inclinaison dont la valeur est différente de la valeur d'inclinaison idéale, et de préférence inférieure, tout en assurant l'équilibre du véhicule, l'angle d'inclinaison idéale étant tel que la résultante des forces appliquées au centre de gravité du véhicule ou de sa partie inclinable, passe par l'axe de symétrie longitudinal du polygone de sustentation du véhicule et **en ce que** le véhicule est équipé de moyens de blocage assurant automatiquement le blocage de ladite inclinaison lorsque le véhicule s'arrête ou roule à vitesse réduite, et de moyens pour limiter l'inclinaison à une valeur maximale telle que, sur sol horizontal et à ladite inclinaison maximale, le véhicule à l'arrêt ne bascule pas.

2. Véhicule selon l'une des revendications précédentes, **caractérisé en ce que** lesdits moyens d'équilibrage comportent un servomécanisme commandant ladite inclinaison dudit châssis (3) et desdites roues (10), ledit servomécanisme constituant également et de manière avantageuse les moyens de blocage de ladite inclinaison.

3. Véhicule suivant l'une des revendications précédentes, dans lequel lesdits moyens d'équilibrage comprennent des moyens faisant varier l'importance de l'effort devant être exercé par le pilote pour obtenir l'inclinaison, en fonction de la vitesse du véhicule, de telle sorte qu'à faible vitesse, l'effort soit plus important qu'à grande vitesse.

4. Véhicule selon l'une quelconque des revendications précédentes, **caractérisé en ce que** lesdits moyens d'équilibrage comportent une came (7) montée articulée par une première extrémité sur le châssis (3), ainsi que deux ressorts amortisseurs (8) dont l'une des extrémités est fixée d'un côté ou de l'autre du châssis (3) sur l'un des bras de l'essieu, préférentiellement au voisinage de la roue (10), les autres extrémités des deux ressorts amortisseurs (8) étant montées articulées directement sur la came (7), de préférence de manière telle que l'axe de chacun desdits ressorts amortisseurs (8) reste le plus possible suivant une direction verticale.

5. Véhicule suivant l'une des revendications précédentes **caractérisé en ce que** les moyens d'équilibrage comportent d'une part des moyens de détection de l'accélération transversale résiduelle à laquelle le véhicule est soumis et d'autre part des moyens de blocage de l'inclinaison du véhicule en fonction de l'accélération transversale résiduelle et au moins dans le sens de cette accélération transversale résiduelle.

6. Véhicule selon l'une quelconque des revendications précédentes, dans lequel lesdits moyens de limitation comprennent des moyens faisant varier l'inclinaison maximale en fonction de la vitesse du véhicule de telle sorte qu'à faible vitesse, l'inclinaison maximale soit plus faible qu'à grande vitesse.

7. Véhicule selon l'une quelconque des revendications précédentes, **caractérisé en ce qu'**il comporte en outre des moyens de redressement pour permettre de redresser le véhicule s'il n'est pas dans la position verticale.

8. Véhicule selon l'une quelconque des revendications précédentes, comportant des moyens à la disposition du conducteur pour débloquer à la demande lesdits moyens de blocage de l'inclinaison, en particulier pour redresser le véhicule et le ramener en position verticale à l'arrêt.

9. Véhicule selon l'une quelconque des revendications précédentes, **caractérisé en ce que** ledit véhicule est équipé d'au moins une porte coulissante (13) occupant une moindre place à son ouverture au voisinage du véhicule, évitant le risque de basculement du véhicule.

10. Véhicule selon l'une quelconque des revendications précédentes, **caractérisé en ce que** ledit poste de conduite comporte deux sièges respectivement avant (2) et arrière (14), placés l'un derrière l'autre, pour accueillir un conducteur (9) à l'avant et un passager à l'arrière, chacun des deux sièges (2, 14) comportant une assise (21, 15) et un dossier (22, 16), et **en ce que** le dossier (22) du siège du conducteur est monté pivotant autour d'un axe pour être rabattu contre la carrosserie (4), de manière à livrer passage audit passager vers ledit siège arrière (14).

11. Véhicule selon l'une quelconque des revendications précédentes, comportant deux sièges, respectivement avant (2) et arrière (14), placés l'un derrière l'autre, pour accueillir un conducteur (9) à l'avant et un passager à l'arrière, chacun des deux sièges (2, 14) comportant une assise (21, 15) et un dossier (22, 16), **caractérisé en ce que** le dossier (16) du siège arrière (14) est monté mobile en translation pour être appliqué contre le dossier (22) du siège avant (2) dans le cas où le passager n'est pas présent, afin de libérer un espace de rangement plus important à l'arrière du véhicule, le dossier (16) du siège arrière (14) étant avantageusement équipé d'un plateau (17) monté pivotant sur le dos du dossier entre une position où il constitue un fond de coffre couvrant l'assise (15) du siège arrière (14) quand le dossier (16) dudit siège arrière (14) est placé contre le dossier (22) dudit siège avant (2), et une position où ledit plateau s'applique contre le dos du dossier.

## Claims

1. Motorised vehicle (1) of the type having four wheels (10), said vehicle comprising :
- a driver's seat (2) contained within a driving cabin which accomodates only one person width-wise, the said driving cabin being integral with a chassis (3) comprising a structure (4) for protecting the driver;
- balancing means associated with the said chassis (3) for ensuring the vehicle equilibrium, in bends or over sloping ground with respect to the horizontal, by simultaneous inclination of the chassis (3) and at least the front wheels (10) of the said vehicle in relation to the ground,
**characterised in that** said balancing means also allow the inclination of the vehicle at an angle of inclination whose value is different from, and preferably lower than, the ideal inclination value, while still ensuring the vehicle equilibrium, the ideal angle of inclination being such that the resultant of the forces applied to the centre of gravity of the vehicle, or of its inclinable part, passes through the longitudinal axis of symmetry of its sustentation polygon, and **in that** said vehicle further comprises :
- means for locking the said inclination when the vehicle is at rest or moving at low speed, which means operate automatically when said vehicle slows to a predetermined threshold speed in order to lock the inclination in the current position,
- and means for limitating the inclination to a maximum value such that, on horizontal ground and at said maximum inclination, the vehicle at rest does not roll over.

2. Vehicle according to claim 1, **characterised in that** said balancing means comprise a servomechanism which controls the inclination of said chassis (3) and of said wheels (10), said servomechanism also advantageously constituting the means for locking said inclination.

3. Vehicle according to anyone of the preceding claims, wherein said balancing means comprise means which make the amount of force which the driver has to exert in order to obtain the inclination to vary according to the speed of the vehicle in such a way that, at law speed, the force is greater that at high speed.

4. Vehicle according to anyone of the preceding claims, **characterised in that** said balancing means comprise a cam (7) which is mounted with a first end articulated on the chassis (3), and also two damping springs (8), on either side of the chassis, one of whose ends is fixed onto one of the arms of the axle, preferably in the vicinity of the wheel (10), the other ends of the two damping springs (8) being mounted so as to be articulated directly on the cam (7), preferably in such a way that the axis of each of the said damping springs (8) remains, as far as possible, in a vertical position.

5. Vehicle according to anyone of the preceding claims, **characterised in that** the balancing means comprise, on the one hand, means for detecting the residual transverse acceleration to which the vehicle is subjected and, on the other hand, means for locking the inclination of the vehicle according to the residual transverse acceleration and at least in the direction of the said residual transverse acceleration.

6. Vehicle according to anyone of the preceding claims, wherein said limitating means comprise means which vary the maximum inclination according to the speed of the vehicle in such a way that, at low speed, the maximum inclination is lower that at high speed.

7. Vehicle according to anyone of the preceding claims, **characterised in that** it also comprises straightening-up means in order to make it possible to straighten the vehicle up if it is not in the vertical position.

8. Vehicle according to anyone of the preceding claims, comprising means which are at the driver's disposal in order to unlock, as required, the said means for locking the inclination, particularly in order to straighten the vehicle up and bring it back into the vertical position when at rest.

9. Vehicle according to anyone of the preceding claims; **characterised in that** the said vehicle is equipped with at least one sliding door (13) which, on being opened, occupies a smaller space in the vicinity of the vehicle, thus avoiding the risk of the vehicle tipping over.

10. Vehicle according to anyone of the preceding claims, **characterised in that** said driving cabin comprises two seats, a front seat (2) and a rear seat (14) respectively, which are located one behind the other, in order to accomodate the driver (9) at the front and a passenger at the rear, each of the two seats (2, 14) comprising a squab (21, 15) and a backrest (22, 16), and **in that** the backrest (22) of the driver's seat is mounted so as to pivot about a shaft in order to be folded back against the body (4) in such a way as to allow said passenger to reach the rear seat (14).

11. Vehicle according to anyone of the preceding claims, said vehicle comprising two seats, a front seat (2) and a rear seat (14) respectively, which are located one behind the other, in order to accomodate the driver (9) at the front and a passenger at the rear, each of the two seats (2, 14) comprising a squab (21, 15) and a backrest (22, 16), **characterised in that** the backrest (16) of the rear seat (14) is mounted so as to be movable in translation in order to be pressed against the backrest (22) of the front seat (2) if no passenger is present, in order to make available a larger storage space at the rear of the vehicle, the backrest (16) of the rear seat (14) being advantageously equipped with a tray (17) which is mounted so as to pivot, on the back of the backrest, between a position in which it constitutes a boot floor which covers the squab (15) of the rear seat (14) when the backrest (16) of the rear seat (14) is located against the backrest (22) of said front seat (2), and a position in which the said tray is pressed against the back of the backrest.

## Patentansprüche

1. Kraftfahrzeug (1) mit vier Rädern (10), mit:
- einem in einem Führerstand angeordneten Fahrersitz (2), der in der Breite nur eine einzige Person aufnimmt, wobei der Führerstand mit einem Chassis (3) verbunden ist, das einen Aufbau (4) zum Schutz des Fahrers aufweist,
- Ausgleichsmitteln, die dem Chassis (3) zugeordnet sind, welche es ermöglichen, das Gleichgewicht des Fahrzeugs in Kurven oder auf einem bezüglich der Horizontalen geneigten Boden durch gleichzeitige Neigung des Chassis (3) und wenigstens eines der Vorderräder (10) des Fahrzeugs relativ zum Boden sicherzustellen,
**dadurch gekennzeichnet dass** die Ausgleichmitteln auch eine Neigung des Fahrzeugs gemäß einem Neigungswinkel ermöglichen, dessen Wert von dem idealen Neigungswert verschieden und vorzugsweise kleiner ist, wobei das Gleichgewicht des Fahrzeugs aufrecht erhalten wird, wobei der ideale Neigungswinkel so gewählt ist, dass die Resultierende der am Schwerpunkt des Fahrzeugs oder seines neigbaren Teils angreifenden Kräfte durch die Längssymmetrieachse des Stützpolygons des Fahrzeugs verläuft,
und **gekennzeichnet durch** :
- Mittel zum Blockieren der Neigung wenn sich das Fahrzeug im Stillstand befindet oder wenn das Fahrzeug mit verringerter Geschwindigkeit fährt, die, wenn es sich auf eine vorgegebene Grenzgeschwindigkeit verlangsamt, automatisch eingreifen, um die Neigung in der gegenwärtigen Position zu blockieren,
- und Mittel zur Begrenzung der Neigung auf einen solchen Maximalwert, dass das Fahrzeug auf horizontalem Boden und bei maximaler Neigung im Stillstand nicht kippt.

2. Fahrzeug gemäß Anspruch 1, **dadurch gekennzeichnet, dass** die Ausgleichsmittel einen Servomechanismus aufweisen, der die Neigung des Chassis (3) und der Räder (10) steuert, wobei der Servomechanismus außerdem und vorteilhaft die Mittel zum Blockieren der Neigung bildet.

3. Fahrzeug gemäß einem der vorhergehenden Ansprüche, bei dem die Ausgleichsmittel Mittel umfassen, welche abhängig von der Geschwindigkeit des Fahrzeugs die Größe der Kraft verändern, die vorn Fahrer ausgeübt werden muss, um die Neigung zu erzielen, so dass bei geringer Geschwindigkeit die Kraft größer als bei hoher Geschwindigkeit ist.

4. Fahrzeug gemäß einem der vorhergehenden Ansprüche, **dadurch gekennzeichnet, dass** die Ausgleichsmittel eine Nocke (7) aufweisen, die mit einem ersten Ende drehbar am Chassis (3) angelenkt ist, sowie zwei Dämpfungsfedern (8), von denen jeweils ein Ende auf der einen bzw. der anderen Seiten des Chassis (3) an einem der Achslenker, vorzugsweise in der Nähe des Rades (10) befestigt ist, während das jeweils andere Ende der beiden Federdämpfer (8) direkt an der Nocke (7) angelenkt sind, vorzugsweise so, dass die Achse von jedem der Federdämpfer (8) soweit wie möglich in einer vertikalen Richtung orientiert bleibt.

5. Fahrzeug gemäß einem der vorhergehenden Ansprüche, **dadurch gekennzeichnet, dass** die Ausgleichsmittel einerseits Mittel zur Detektion einer Restquerbeschleunigung, der das Fahrzeug unterliegt, und andererseits Mittel zur Blockierung der Neigung des Fahrzeugs in Abhängigkeit von der Restquerbeschleunigung und wenigstens in Richtung dieser Restquerbeschleunigung aufweist.

6. Fahrzeug gemäß einem der vorhergehenden Ansprüche, bei dem die Mittel zur Begrenzung Mittel umfassen, welche die maximale Neigung in Abhängigkeit von der Geschwindigkeit des Fahrzeugs so ändern, dass bei geringer Geschwindigkeit die maximale Neigung geringer als bei hoher Geschwindigkeit ist.

7. Fahrzeug gemäß einem der vorhergehenden Ansprüche, **dadurch gekennzeichnet, dass** es außerdem Aufrichtmittel aufweist, die ein Aufrichten des Fahrzeugs ermöglichen, wenn es sich nicht in der vertikalen Position befindet.

8. Fahrzeug gemäß einem der vorhergehenden Ansprüche, welches dem Fahrer zur Verfügung stehende Mittel aufweist, um auf Aufforderung die Mittel zur Blockierung der Neigung freizugeben, insbesondere, um das Fahrzeug aufzurichten und es im Stillstand in die vertikale Position zurückzuversetzen.

9. Fahrzeug gemäß einem der vorhergehenden Ansprüche, **dadurch gekennzeichnet, dass** das Fahrzeug mit wenigstens einer Schiebetür (13) versehen ist, die bei ihrem Öffnen einen niedrigeren Platz dicht am Fahrzeug einnimmt und so die Gefahr eines Kippens des Fahrzeugs vermeidet.

10. Fahrzeug gemäß einem der vorhergehenden Ansprüche, **dadurch gekennzeichnet, dass** der Führerstand zwei Sitze, nämlich einen Vordersitz (2) und einen Rücksitz (14) aufweist, die hintereinander angeordnet sind, um vorn einen Fahrer (9) und hinten einen Passagier aufzunehmen, wobei jeder der beiden Sitze (2, 14) eine Sitzfläche (21, 15) und eine Rückenlehne (22, 16) aufweist, und **dadurch** dass die Rückenlehne (22) des Fahrersitzes um eine Achse schwenkbar montiert ist, damit sie zur Karosserie (4) hin zurückgeklappt werden kann, um für den Passagier einen Durchgang zum Rücksitz (14) freizugeben.

11. Fahrzeug gemäß einem der vorhergehenden Ansprüche, das zwei Sitze, nämlich einen Vordersitz (2) und einen Rücksitz (14) aufweist, die hintereinander angeordnet sind, um vorn einen Fahrer (9) und hinten einen Passagier aufzunehmen, wobei jeder der beiden Sitze (2, 14) eine Sitzfläche (21, 15) und eine Rückenlehne (22,16) aufweist, **dadurch gekennzeichnet, dass** die Rückenlehne (16) des Rücksitzes (14) in Längsrichtung beweglich montiert ist, damit sie in dem Fall, wenn kein Passagier an Bord ist, gegen die Rückenlehne (22) des Vordersitzes (2) in Anlage gebracht werden kann, um eine größere Abstellfläche im hinteren Teil des Fahrzeugs freizugeben, wobei die Rückenlehne (16) des Rücksitzes (14) vorzugsweise mit einer Platte (17) versehen ist, die schwenkbar zwischen einer Position, in der sie den Boden des Kofferraums bildet und die Sitzfläche (15) des Rücksitzes (14) bedeckt, wenn die Rückenlehne (16) des Rücksitzes (14) in Anlage gegen die Rückenlehne (22) des Vordersitzes (2) angeordnet ist, und einer Position, in der die Platte gegen die Rückseite der Rückenlehne in Anlage kommt, auf der Rückseite der Rückenlehne montiert ist.
